# EUROPEAN PATENT APPLICATION

(11) **EP 4 831 872 A1**
(43) Date of publication of application: **28.10.2026**
(21) Application number: 26172939.6
(22) Date of filing: 17.04.2026
(51) Int. Cl.: G06N 3/0455, G06N 3/084, G06N 3/0464, G06V 10/44, G06V 10/82, G06V 10/764, G06N 3/048

(54) **FEATURE EXTRACTION METHOD AND ELECTRONIC DEVICE**

(30) Priority: 21.04.2025 CN 202510497466
(71) Applicant: Coretronic Corporation, Hsin-Chu 300 (TW)
(72) Inventor: LIOU, Yi-Fan, 300 Hsin-Chu (TW); LIN, Po-Ju, 300 Hsin-Chu (TW); KANG, Hsueh-Hong, 300 Hsin-Chu (TW); CHIU, Chi-Cheng, 300 Hsin-Chu (TW); LIN, Zong-Han, 300 Hsin-Chu (TW); CHIANG, Hung-Sheng, 300 Hsin-Chu (TW); CHEN, Kui-Ting, 300 Hsin-Chu (TW)
(74) Representative: Ter Meer und Partner mbB

(57) **Abstract**

A feature extraction method and an electronic device are provided. The feature extraction method includes performing a transformation on input data to obtain a feature map, wherein the feature map includes multiple feature vectors; comparing each of the feature vectors with multiple first codes in a first codebook to obtain an index; obtaining a second code from a second codebook according to the index, wherein the first codebook is different from the second codebook; computing an excitation value according to a similarity level of the feature vectors; adjusting values of the second code according to the excitation value; and generating an output feature map according to the adjusted second code.

## Description

This application claims priority of China application serial no. 202510497466.5, filed on April 21, 2025.

### BACKGROUND

### Technical Field

The disclosure relates to a feature extraction method in the field of machine learning.

### Description of Related Art

In the field of deep learning, the development of image processing technologies relies heavily on efficient feature extraction methods. Especially in tasks such as object classification and edge detection, the effectiveness of feature extraction directly affects the performance and the accuracy of deep-learning models. Over the past few decades, advancements in various feature extraction techniques have driven the progress of image processing. Convolutional neural networks (CNNs), transformers, and vector quantization (VQ) technologies are three of the most representative approaches.

First, the development of CNNs marks the beginning of the era of structured learning for image tasks. Through convolutional computations, CNNs can effectively extract local features from images, and through the combination of multi-layer convolution, pooling, and non-linear activation functions, the model can gradually learn higher-level semantic information. Such a method overcomes the limitations of traditional hand-crafted feature extraction methods and has achieved breakthroughs in fields such as image classification and object detection. However, the feature extraction ability of the CNN mainly relies on local receptive fields, so the CNN may be limited when dealing with long-distance dependencies.

In order to solve the shortcomings of the CNN in capturing global information, the transformer models have been introduced into the field of image processing. The transformer models incorporate a global attention mechanism, and the self-attention mechanism demonstrates strong capability in modeling long-range dependencies. For example, the Vision Transformer (ViT) uses the self-attention mechanism to establish correlations between different regions in an image, providing a global feature extraction ability distinct from the CNNs. However, due to the high computational complexity, the transformers are prone to bottlenecks in computing resources and efficiency when processing high-resolution images.

On the other hand, the development of VQ techniques originates from challenges in the field of generative models. Traditional variational autoencoders (VAEs) often suffer from issues of blurring and detail distortion when generating images due to the use of continuous latent space representation. In order to solve the issues, the vector quantization method have emerged. The core concept is to use discrete latent variables to improve the quality of image generation. For example, the VQ-VAE improves the clarity and the consistency of generated images by learning a set of discrete codebooks, thereby overcoming the issue of blurring faced by VAEs. The development of this technology not only improves the performance of image generation models, but also provides a new way for feature representation in image processing tasks.

In summary, existing technologies have made great progress in image feature extraction, but there are still issues in the trade-off between local feature and global feature extraction, computational efficiency, and resource consumption. Therefore, it is still necessary to provide a more efficient image processing method that can take into account both local and global features, so as to further improve the performance of deep-learning models in image analysis and visual tasks.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

The disclosure provides a feature extraction method and an electronic device. Other objectives and advantages of the disclosure may be further understood from the technical features of the disclosure.

The object is solved by the features of the independent claims preferred embodiments are given in the dependent claims.

To achieve one, part, or all of the above objectives or other objectives, an embodiment of the disclosure provides a feature extraction method. The feature extraction method includes the following steps. A first transformation is performed on input data to obtain a first feature map. The first feature map includes multiple first feature vectors. For each of the first feature vectors, the first feature vector is compared with multiple first codes in a first codebook to obtain a first index. A second code is obtained from a second codebook according to the first index. The first codebook is different from the second codebook. An excitation value is computed according to a similarity level of the first feature vectors. Values of the second code are adjusted according to the excitation value to obtain a adjusted second code. An output feature map is generated according to the adjusted second code.

From another perspective, an embodiment of the disclosure provides an electronic device including a memory and a processor. The memory stores multiple commands. The processor is electrically connected to the memory and is configured to execute the commands to complete the feature extraction method.In one or more embodiments, the input data may comprise a plurality of input vectors.

In one or more embodiments, the first transformation may be a convolutional computation.

In one or more embodiments, a length of the input vectors may be the same as a length of the first feature vectors.

In one or more embodiments, the step of comparing the first feature vector with the first codes in the first codebook to obtain the first index may comprise computing a similarity between the first feature vector and each of the first codes, and setting an index of the first code having the highest similarity as the first index.

In one or more embodiments, the step of computing the excitation value according to the similarity level of the first feature vectors may comprise performing a second transformation on the first feature map to obtain a second feature vector; for each of the first feature vectors, computing a first similarity between the first feature vector and the second feature vector; performing a third transformation on the first feature map to obtain a third feature map; and adjusting values of the third feature map according to the first similarity to obtain the excitation value.

In one or more embodiments, the step of adjusting the values of the third feature map according to the first similarity to obtain the excitation value may comprise substituting the third feature map and the first similarity into a generalized logistic function to obtain the excitation value.

In one or more embodiments, the step of adjusting the values of the second code according to the excitation value may comprise element-wise multiplying the excitation value by the second code to obtain a product vector.

In one or more embodiments, the step of generating the output feature map according to the adjusted second code may comprise adding the product vector to a corresponding one of the input vectors to obtain an output feature vector in the output feature map.

In one or more embodiments, the feature extraction method may comprise for a plurality of samples in a batch, computing a number of matching times of each of the first codes; and determining a learning rate according to the number of matching times.

In one or more embodiments, the step of determining the learning rate according to the number of matching times may comprise accumulating a similarity between each two of the first codes to obtain a total similarity; and multiplying the total similarity by a number of matches of the first codes, and then dividing by a maximum number of matching times to obtain the learning rate.

In one or more embodiments, the feature extraction method may comprise in a training stage, computing an error between each of the first feature vectors and a corresponding one of the first codes as a part of a loss.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

FIG. 1 is a schematic diagram of an electronic device according to an embodiment.
FIG. 2 is a structural diagram of a transmitter according to an embodiment.
FIG. 3 is a structural diagram of a transduction layer according to an embodiment.
FIG. 4 is a flowchart of a feature extraction method according to an embodiment.
FIG. 5 is a schematic diagram of a network of forward propagation according to an embodiment.
FIG. 6 is a schematic diagram of a network of back propagation according to an embodiment.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top", "bottom", "front", "back", etc., is used with reference to the orientation of the Figure(s) being described. The components of the invention can be positioned in a number of different orientations. As such, the directional terminology is used for purposes of illustration and is in no way limiting.

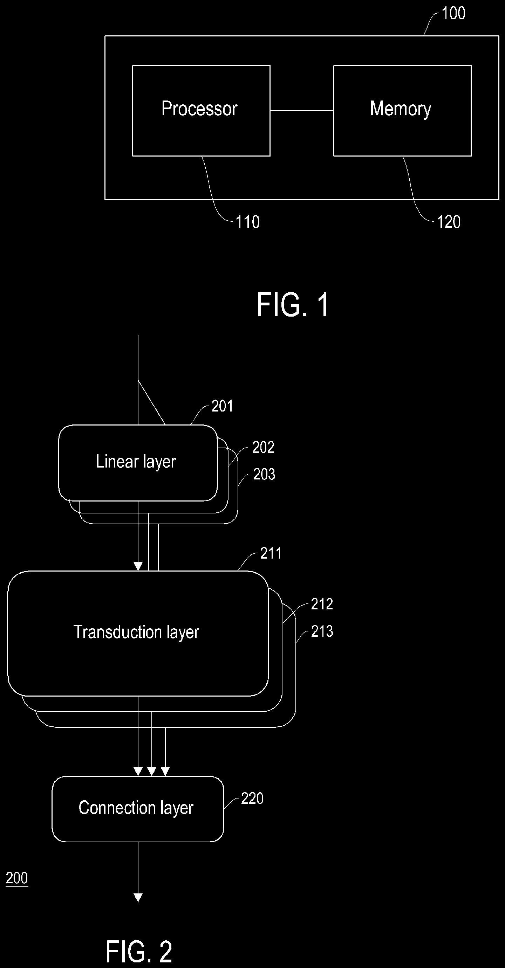

FIG. 1 is a schematic diagram of an electronic device according to an embodiment. Please refer to FIG. 1. An electronic device 100 may be a smart phone, a tablet computer, a personal computer, a notebook computer, a server, an industrial computer, or various electronic devices with computing capability, but the disclosure is not limited thereto. The electronic device 100 includes a processor 110 and a memory 120. The processor 110 is electrically connected to the memory 120. The processor 110 may be a central processing unit, a graphics processing unit, a microprocessor, a microcontroller, a deep-learning processing unit (DPU), a neural-network processing unit (NPU), a tensor processing unit (TPU), an application specific integrated circuit (ASIC), a programmable logic device (PLD), etc. The memory 120 may be a random-access memory, a read-only memory, a flash memory, a floppy disk, a hard disk, an optical disk, a flash drive, a magnetic tape, or a database accessible via a network, in which multiple programs (e.g., code) or instructions are stored. The processor 110 executes the programs or instructions to perform a feature extraction method, which will be described below.

The feature extraction method is, for example, adapted to machine learning and is configured to input data into a neural network and then obtain a feature map. The data may include, for example, image data, text data, video information, sound data, binary data, a feature vector of an image (or an object within the image), such as a feature vector encoded by a convolutional neural network in a previous stage. The feature extraction method is configured to further obtain feature information or details of the object in the image, thereby improving the accuracy of machine learning. The disclosure provides a transmitter based on a transduction mechanism, which concatenates matching features and expression features in an index manner, separates a vector for matching and a vector for expression independently, and decouples matching and expression.

FIG. 2 is a structural diagram of a transmitter according to an embodiment. Please refer to FIG. 2. A transmitter 200 includes multiple heads and a connection layer 220. Each head includes a linear layer and a transduction layer. For example, a first head includes a linear layer 201 and a transduction layer 211, a second head includes a linear layer 202 and a transduction layer 212, and a third head includes a linear layer 203 and a transduction layer 213. Each of the linear layers 201 to 203, for example, includes matrix multiplication to mix dimensions of signals (e.g., data) , adjust the size of the dimensions, and generate input data. The transduction layers 211 to 213 respectively outputs an output feature map, and the connection layer 220 connects (CONCAT) the output feature maps together to produce the feature map, such as connecting one output feature map after another output feature map to increase the number of channels. In other embodiments, the transmitter 200 may also include more or fewer heads. In some embodiments, the linear layers 201 to 203 may be replaced by convolutional layers. In some embodiments, the connection layer 220 may also perform element-wise addition on multiple output feature maps. In other embodiments, other layers may be added before or after the transduction layers 211 to 213, but the disclosure is not limited thereto.

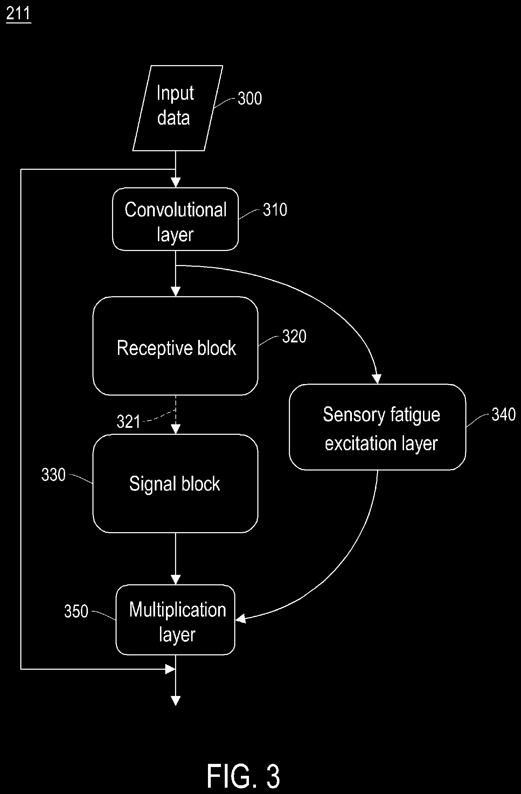

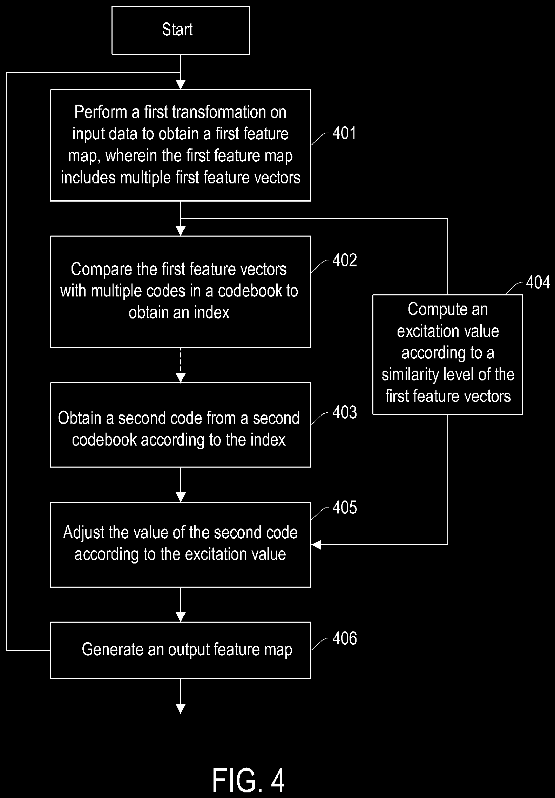

FIG. 3 is a structural diagram of a transduction layer according to an embodiment. FIG. 4 is a flowchart of a feature extraction method according to an embodiment. Please refer to FIG. 3 and FIG. 4. The network structure of FIG. 3 corresponds to the process of FIG. 4. Taking the transduction layer 211 as an example, the transduction layer 211 includes a convolutional layer 310, a receptive block 320, a signal block 330, a sensory fatigue excitation layer 340, and a multiplication layer 350.

First, the linear layer 201 output an input data 300 to the transduction layer 211. The input data 300 may be image data, text data, video information, sound data, binary data, etc., but the disclosure is not limited thereto. In some embodiments, the input data 300 includes multiple input vectors. Each input vector may also be referred to as a token. In the image data, a token may be one or more pixels. Multiple channels (for example, red, green, blue) of the pixels form one vector. In the video data, a token may be multiple pixels across time. The channels of the pixels form one vector. In the text data, a token may be a letter, a word, a sub-word, or an encoding such as a unicode. In the binary data, a token may include bits of any length. In this example, the input data 300 is represented by a matrix X. Multiple columns of the matrix X represent multiple input vectors. In addition, there is at least one sample (for example, the input data 300) in a batch, and each sample is the matrix X.

In step 401, a first transformation is performed on the input data 300 by the convolutional layer 310 to obtain a first feature map. The first feature map is, for example, an extracted feature of the input data 300. In the embodiment, the first transformation is a convolutional computation. In other embodiments, the first transformation may also be linear transformation, pooling, upsampling, etc., but the disclosure is not limited thereto. The first feature map is expressed as a matrix Q. The matrix Q includes multiple feature vectors (that is, multiple first feature vectors), as shown in Mathematical formula 1 below. [Mathematical formula 1] ${Q}_{b} ≡ \left\{\left.{q}_{b , i}\right|i=1⋯N\right\} = {f}_{θ} \left({X}_{b}\right) ∈ {R}^{N \times C}$
where *X_{b}* represents the b-th sample in a batch, *Q_{b}* represents the first feature map corresponding to the b-th sample, *f_{θ}* () is the first transformation, and *q_{b,i}* is the i-th feature vector in the matrix *Q_{b}*. The length of each feature vector is C. N and C are positive integers, N represents the number of feature vectors, and C is also referred to as the number of channels. Here, the first transformation *f_{θ}* () is designed such that the length of an input vector in an input matrix X is the same as the length of the feature vector *q_{b,i}* (both are C).

In step 402, each feature vector *q_{b,i}* in the matrix *Q_{b}* (the first feature map) is compared with multiple codes in a codebook (referred to as a first codebook) by the receptive block 320, so as to obtain an index (also referred to as a first index). The first codebook is expressed as a matrix K, as shown in Mathematical formula 2 below. [Mathematical formula 2] $K ≡ \left\{\left.{k}_{j}\right|j=1⋯M\right\} ∈ {R}^{M \times C}$

Specifically, the matrix K is a trainable parameter when training the model. In some embodiments, a normal distribution may be used during initialization, with a mean of 0 and a standard deviation of 0.05, but the disclosure is not limited thereto. The matrix K includes M codes, *kⱼ* representing the j-th code. The length of each code is C. M is a positive integer. In some embodiments, the similarity between the feature vector *q_{b,i}* and each code *kⱼ* may be computed (compared), and an index of the code *kⱼ* (the index is, for example, the position of the code *kⱼ* in the first codebook) having the highest similarity is set as the first index. The computation is expressed as Mathematical formula 3 below. [Mathematical formula 3] ${index}_{b , i} = {argmin}_{j} \left({similarity}_{j}\left({q}_{b , i}, {k}_{j}\right)\right)$
where *similarityⱼ*(*q_{b,i}, kⱼ*) is the similarity between the feature vector *q_{b,i}* and the code *kⱼ.* Here, cosine similarity, Euclidean distance, Manhattan distance, etc. may be used, and the code *kⱼ* with the shortest distance (or the greatest similarity) is obtained, where j is the same as the index *index_{b,i}.* For each feature vector *q_{b,i},* the corresponding index *index_{b,i}* may be computed and is expressed as an index 321 (first index) in FIG. 3. In FIG. 3, the index 321 is represented by a dotted line because the computation is not differentiable, which will be explained in detail later when training is mentioned.

Next, in step 403, a code (also referred to as a second code) is obtained from the second codebook according to the index 321 by the signal block 330. The second codebook is expressed as a matrix V, as shown in Mathematical formula 4 below. [Mathematical formula 4] $V ≡ \left\{\left.{v}_{j}\right|j=1⋯M\right\} ∈ {R}^{M \times C}$

Specifically, the matrix V is also a trainable parameter when training the model. The matrix V includes M codes, *vⱼ* representing the j-th code. The length of each code is C. According to the index *index_{b,i}* computed above, a code corresponding to the position of the index *index_{b,i}* may be found from the second codebook, as shown in Mathematical formula 5 below. [Mathematical formula 5] ${Y}_{i} = V {δ}_{i} \left({index}_{b , i}\right)$
where *δᵢ* (*index_{b,i}*) is a vector in which only the value of the *index_{b,i}*-th element is 1 and the other values are 0, so as to extract the *index_{b,i}*-th code from the matrix V. *Yᵢ* is the extracted code (second code).

The first codebook has the same number of codes as the second codebook, but the codes are not the same. In other words, two different codebooks (the matrix K and the matrix V are different) are used in the embodiment. The role of the first codebook is vector quantization to transform the feature vector *q_{b,i}* into the discrete codes *kⱼ.* The discrete codes *kⱼ* are the vectors for matching. Using the discrete vectors may reduce the amount of computation and the number of parameters. On the other hand, the second codebook is configured to express features. Subsequent computations are based on the codes *Yᵢ* in the second codebook. The codes *Yᵢ* are the vectors for expression. Here, the vector for matching and the vector for expression are separated independently to decouple matching and expression.

Next, in step 404, an excitation value is computed according to a similarity level between the first feature vectors (the feature vectors *q_{b,i}*) by the sensory fatigue excitation layer 340. The similarity level is negatively correlated with the excitation value. In other words, the greater the similarity level, the smaller the excitation value, which is to prevent the feature vectors *q_{b,i}* from being too similar, causing rank collapse in the first codebook. If there are too many feature vectors *q_{b,i}* that are similar to each other, several of the feature vectors *q_{b,i}* will be overused, and this issue should be mitigated. The similarity level may be expressed in the form of standard deviation, similarity, distance, etc., but the disclosure is not limited thereto. Alternatively, principal component analysis may also be executed on the feature vectors *q_{b,i},* and the similarity level may be computed according to eigenvalues.

In some embodiments, a second transformation may be performed on the first feature map (the matrix *Q_{b}*) to obtain a second feature vector. Then, the similarity between each feature vector *q_{b,i}* and the second feature vector is computed. The computations may be expressed as Mathematical formula 6 and Mathematical formula 7 below. 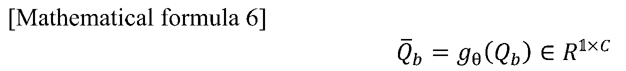 [Mathematical formula 7] ${F}_{b , i} = \frac{- similarity \left({\overline{Q}}_{b}, {q}_{b , i}\right) + 1}{2}$
where *g_{θ}* () is the second transformation, which may be implemented as a convolutional computation or a linear computation (matrix multiplication) to transform the matrix *Q_{b}* corresponding to the b-th sample into the second feature vector *Q̅_{b}* with a length of C. *F_{b,i}* is the similarity corresponding to the i-th feature vector in the b-th sample, and the similarity *F_{b,i}* is a scalar. There are a total of N similarities *F_{b,i}* in the b-th sample, and the similarities may be expressed as a vector *F_{b}* with a length of N. After training, the second transformation *g_{θ}* () is configured to compute the feature vector that may represent the matrix *Q_{b}.* In some embodiments, the second transformation *g_{θ}* () may also be to compute the mean or the median. In some embodiments, the second transformation *g_{θ}* () may also be principal component analysis (PCA) to obtain the most important principal component. In the embodiment, *similarity*(*Q̅_{b}, q_{b,i}*) is cosine similarity, but the disclosure is not limited thereto. If the feature vectors *q_{b,i}* are very similar to each other, the similarity *Fᵢ* is relatively large.

Next, a third transformation is performed on the first feature map (the matrix *Q_{b}*) to obtain a third feature map. Then, values in the third feature map are adjusted according to the similarity *F_{b}* to obtain the excitation value. If the similarity *F_{b}* is greater, the values in the third feature map will be decreased. Conversely, if the similarity *F_{b}* is smaller, the values in the third feature map will be increased. In some embodiments, the computation may be expressed as Mathematical formula 8 and Mathematical formula 9 below. [Mathematical formula 8] ${S}_{b} = {h}_{θ} \left({Q}_{b}\right) ∈ {R}^{N \times C}$ [Mathematical formula 9] ${A}_{b} = \frac{{S}_{b}}{{S}_{b} + {e}^{- {F}_{b}}} ∈ {R}^{N \times C}$
where *h_{θ}* () is the third transformation, which may be implemented as a convolutional computation or a linear computation. *S_{b}* is the third feature map with dimensions of *N × C. A_{b}* is the excitation value and is a matrix with dimensions of *N* × C. Mathematical formula 9 is to substitute the third feature map *S_{b}* and the similarity *F_{b}* into a generalized logistic function to obtain the excitation value *A_{b}.* In the embodiment, the generalized logistic function is a sigmoid function. Specifically, the third feature map *S_{b}* is element-wise divided by the sum of the third feature map *S_{b}* and the computed similarity *e^{-F_{b}}* to obtain the excitation value *A_{b}.* It is worth noting that the third feature map *S_{b}* and the computed similarity *e^{-F_{b}}* are element-wise added.

Next, in step 405, the values of the obtained second code are adjusted according to the excitation value by the multiplication layer 350 to obtain a adjusted second code. Then, in step 406, the output feature map is generated according to the adjusted second code. For example, the code *Yᵢ* may be element-wise multiplied by the excitation value *A_{b}* to obtain a product vector (that is, the adjusted second code, step 405). Then, the product vector is added to the corresponding input vector of the input data 300 to obtain an output feature vector in the output feature map (step 406). The computation is performed for each of i=1...N and may be expressed as Mathematical formula 10 below using a matrix. ${Z}_{b} = {A}_{b} ⊗ Y ⊕ X$ [Mathematical formula 1]0
where Y is the matrix composed of the codes *Yᵢ* with dimensions of *N × C.* ⊗ is element-wise multiplication. ⊗ is element-wise addition. *Z_{b}* is the output feature map corresponding to the b-th sample. The purpose of using the excitation value *A_{b}* here is to suppress the strength of repeated signals and enhance relatively small amount of signals.

In other embodiments, step 406 may also directly use the product vector *A_{b} ⊗ Y* as the output feature map. Alternatively, step 406 may also add a convolutional layer, a pooling layer, a full connection layer, etc., but the disclosure is not limited thereto.

In the structure of FIG. 3, the index 321 is transmitted in the two codebooks K and V. Since this step is not differentiable, the convolutional layer 310 and the multiplication layer 350 are connected through the sensory fatigue excitation layer 340 here to solve the issue of being not differentiable. In addition, the computed excitation value may be used to adjust the codes in order to prevent rank collapse caused by the codes being too similar. With such a design, during the training stage, the differential of the loss relative to the weight may be transmitted from the tail end of the network to the front end of the network through the sensory fatigue excitation layer 340 based on back propagation.

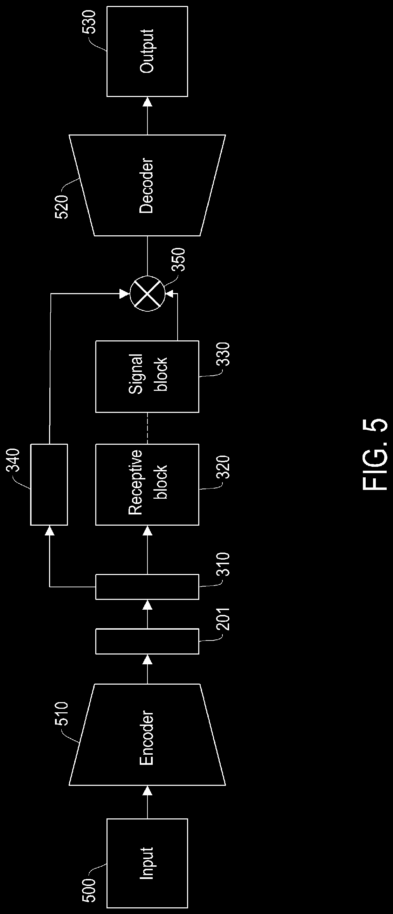

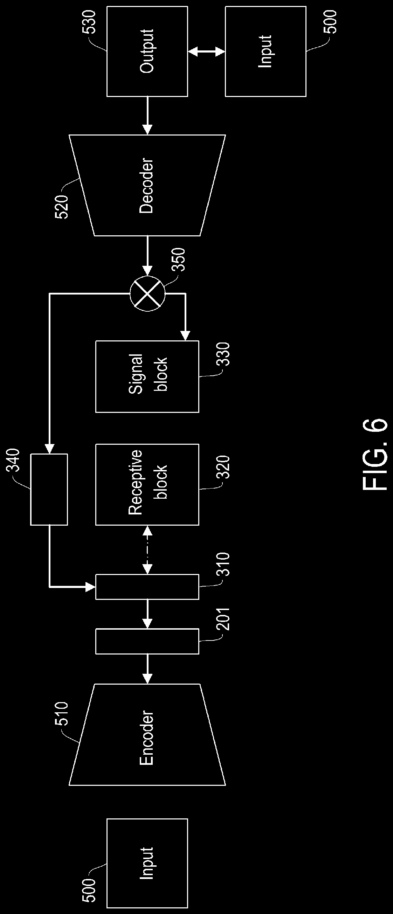

FIG. 5 is a schematic diagram of a network of forward propagation according to an embodiment. FIG. 6 is a schematic diagram of a network of back propagation according to an embodiment. In the embodiments of FIG. 5 and FIG. 6, a structure of an autoencoder is used for training. In a forward propagation stage (see FIG. 5), an input 500 (e.g., data) is transmitted to an encoder 510, and then processed by the linear layer 201, the convolutional layer 310, the receptive block 320, the signal block 330, the sensory fatigue excitation layer 340, and the multiplication layer 350. The computations have been explained above and will not be repeated here. An output of the multiplication layer 350 is transmitted to a decoder 520, and then an output 530 of the decoder 520 is compared with the input 500. The input 500 may be an image, a video, a text, a sound signal, etc., but the disclosure is not limited thereto. An error between the input 500 and the output 530 may be a mean square error (MSE), a mean absolute error (MAE), a cross-entropy, a Huber loss function, a Log-Cosh loss function, etc.

In a back propagation stage (see FIG. 6), a loss (an indicator between a predicted value and a true value) is computed according to a loss function. Then, the differential of the loss relative to the weight is computed, and the differential is transmitted from the decoder 520 to the multiplication layer 350 and the signal block 330. In addition, the differential of the loss relative to the weight is also transmitted to the sensory fatigue excitation layer 340, and then to the convolutional layer 310, the linear layer 201, and the encoder 510, as shown in the weight update of Mathematical formula 11. In particular, referring to a dotted line between the convolutional layer 310 and the receptive block 320, the training of the receptive block 320 is based on an error (difference) between the feature vector *q_{b,i}* and the code *kⱼ.* In this example, the error is the distance of 1-norm, but the disclosure is not limited thereto. In other words, in the training stage, the error between each feature vector *q_{b,i}* and the corresponding code *kⱼ* is computed as a part of the loss function. In the embodiment of FIG. 5, since the autoencoder is used, the loss function also includes the error between the input 500 and the output 530. The error may be a mean square error, a mean absolute error, or any suitable similarity.

In addition to being applied to the autoencoder, the network structure of FIG. 3 may also be applied to other types of machine learning models such as a classifier, segmentation, a generative model, and regression. For example, when applied to the classifier, the classifier (for example, a full connection layer) may be added at the tail end of the network of FIG. 3 to receive the output feature map *Z_{b}.* In some embodiments, the connection layer 220 of FIG. 2 may be further connected to other machine learning models. The machine learning models may be a decision tree, a random forest, a multi-layer neural network, a convolutional neural network, a support vector machine, an extreme gradient boost (XGBoost), etc., but the disclosure is not limited thereto. In addition, the machine learning models may be used for classification, segmentation, generation, regression, speech synthesis, etc., but the disclosure is not limited thereto.

In some embodiments, a learning rate may be determined according to a usage distribution of codes in the first codebook K. Generally, based on gradient decent, the weights in the model may be updated according to Mathematical formula 11 below. [Mathematical formula 11] ${w}_{t + 1} = {w}_{t} - γ \frac{dL}{{dw}_{t}}$
where γ is the learning rate, *wₜ* is the weight of the t-th iteration in the model, and *w*_{*t*+1} is the weight of the (t+1)-th iteration (that is, the updated weight). L is the loss. When the codes in the first codebook K are very different from each other, a greater learning rate may be set. Conversely, when the codes in the first codebook K are very similar to each other, a smaller learning rate may be set.

For example, first, for multiple samples in a batch, the number of matching times of each code in the first codebook K is computed. The number of matching times refers to how many samples are assigned to a code. For example, there are a total of 500 samples, in which 10 samples have used the first code, then the number of matching times for the code is 10. On the other hand, the number of matches of multiple codes in the first codebook K is also computed and refers to how many codes have been used. For example, if there are a total of 16 codes, but only ten of the codes have been used in the batch, then the number of matches is 10.

Then, the similarity between every two codes in the first codebook K is accumulated to obtain a total similarity. Then, the total similarity is multiplied by the number of matches and then divided by the maximum number of matching times to obtain the learning rate *γ*. The computations may be expressed as Mathematical formulas 12 to 14 below. [Mathematical formula 12] ${C}_{b} = \left\{\left.{c}_{i}\right|{c}_{i}={\sum }_{j}^{N} {1}_{i = {index}_{b , j}}\right\} ∈ {R}^{B \times M}$ [Mathematical formula 13] $ρ = \frac{1}{\left(\begin{matrix}BN \\ 2\end{matrix}\right)} {\sum }_{i = 1}^{BN} {\sum }_{j = i + 1}^{BN} \left|1-similarity\left({q}_{i}, {q}_{j}\right)\right|$ [Mathematical formula 14] $ϕ = \frac{ρ {\sum }_{i = 1}^{M} 1 \left({c}_{i}>0\right)}{max {1}_{{c}_{j} ∈ R} {c}_{j}}$
where *cᵢ* represents the number of matching times of the i-th code. *C_{b}* is a matrix with dimensions of *B × M. ρ* is the total similarity. ${\sum }_{i = 1}^{M} 1 \left({C}_{b}>0\right)$ is the number of matches and refers to the number of matching times *cᵢ* greater than 0 in the M codes. *Φ* is a scalar. In some embodiments, the learning rate *γ* may be set to be the same as the scalar *Φ*, the scalar *Φ* may be multiplied by a constant to obtain the learning rate *γ*, or the scalar *Φ* may be substituted into any function to obtain the learning rate *γ*. The computed scalar *Φ* may be different in different batches.

The scalar *Φ* in this example may be regarded as a reward in reinforcement learning to compute the learning rate during the training process. Specifically, if a feature distribution of a sample is uniform and a distribution of used codes is dispersed, there will be a greater learning rate. If the features are highly similar and only a small number of codes are used, the learning rate will be reduced. During back propagation, only the used codes in the first codebook are updated. If only a few codes are used many times, an update speed is reduced, so that the probability of other codes being used is increased. Specifically, the losses of the sample originates from two sources. The first loss is the error between the output of the model and the true value. The second loss is computed based on the codes used in the first codebook. Therefore, if the second loss is reduced, the update speed of the first codebook will slow down, and the sample will tend to update in the direction of the first loss, in order to increase the distance between the sample feature and the most similar code, so that the probability of other codes being used is increased, which can improve the training speed, the convergence, and the stability of the model. The results of a certain experiment are shown in Table 1 below.

**Table 1**

| | Number of parameters | Number of floating point computations | Data set (CIFAR10) | Data set (CIFAR100) | Data set (Food101) |
|---|---|---|---|---|---|
| Disclosure | 1.27M | 0.132G | 85% | 45% | 52% |
| Transformer | 9.7M | 1.1G | 76.23% | 42% | 49% |

Therefore, as shown in Table 1, the method provided in the disclosure may reduce the number of parameters of the model, reduce the number of floating point computations, and achieve improved precision in some data sets.

In summary, the feature extraction method of the embodiment of the disclosure has at least one of the following advantages of reducing the amount of computation, reducing the amount of parameters, and improving precision.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be configured to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. The use of "at least one of...and..." thereof herein may include "one or more of the items contained in the list". For example, the use of "at least one of A and B" thereof herein may include only A, or only B, or A and B. Similarly, the use of "at least one of A, B, and C" thereof herein may include only A, or only B, or only C, or any combination of A, B, and C. Moreover, no element and component in the disclosure is intended to be dedicated to the public regardless of whether the element or component is explicitly recited in the following claims.

## Claims

1. A feature extraction method, the feature extraction method comprising:
performing (401) a first transformation on input data to obtain a first feature map, wherein the first feature map comprises a plurality of first feature vectors;
for each of the first feature vectors, comparing (402) the first feature vector with a plurality of first codes in a first codebook to obtain a first index;
obtaining (403) a second code from a second codebook according to the first index, wherein the first codebook is different from the second codebook;
computing (404) an excitation value according to a similarity level of the first feature vectors;
adjusting (405) values of the second code according to the excitation value to obtain a adjusted second code; and
generating (406) an output feature map according to the adjusted second code.

2. The feature extraction method according to claim 1, wherein the input data comprises a plurality of input vectors.

3. The feature extraction method according to claim 1 or 2, wherein the first transformation is a convolutional computation.

4. The feature extraction method according to claim 1, 2 or 3, wherein a length of the input vectors is the same as a length of the first feature vectors.

5. The feature extraction method according to any one of the preceding claims, wherein the step of comparing the first feature vector with the first codes in the first codebook to obtain the first index comprises:
computing a similarity between the first feature vector and each of the first codes, and setting an index of the first code having the highest similarity as the first index.

6. The feature extraction method according to claim 5, wherein the step of computing the excitation value according to the similarity level of the first feature vectors comprises:
performing a second transformation on the first feature map to obtain a second feature vector;
for each of the first feature vectors, computing a first similarity between the first feature vector and the second feature vector;
performing a third transformation on the first feature map to obtain a third feature map; and
adjusting values of the third feature map according to the first similarity to obtain the excitation value.

7. The feature extraction method according to claim 6, wherein the step of adjusting the values of the third feature map according to the first similarity to obtain the excitation value comprises substituting the third feature map and the first similarity into a generalized logistic function to obtain the excitation value.

8. The feature extraction method according to any one of the preceding claims, wherein the step of adjusting the values of the second code according to the excitation value comprises element-wise multiplying the excitation value by the second code to obtain a product vector.

9. The feature extraction method according to claim 8, wherein the step of generating the output feature map according to the adjusted second code comprises adding the product vector to a corresponding one of the input vectors to obtain an output feature vector in the output feature map.

10. The feature extraction method according to any one of the preceding claims, further comprising:
for a plurality of samples in a batch, computing a number of matching times of each of the first codes; and
determining a learning rate according to the number of matching times.

11. The feature extraction method according to claim 10, wherein the step of determining the learning rate according to the number of matching times comprises:
accumulating a similarity between each two of the first codes to obtain a total similarity; and
multiplying the total similarity by a number of matches of the first codes, and then dividing by a maximum number of matching times to obtain the learning rate.

12. The feature extraction method according to any one of the preceding claims, further comprising in a training stage, computing an error between each of the first feature vectors and a corresponding one of the first codes as a part of a loss.

13. An electronic device (100), comprising:
a memory (120) for storing a plurality of commands; and
a processor (110), electrically connected to the memory (120) and configured to execute the method as defined in any one of the preceding claims.
